# EUROPEAN PATENT APPLICATION

(11) **EP 4 050 496 A1**
(43) Date of publication of application: **31.08.2022**
(21) Application number: 20880002.9
(22) Date of filing: 07.07.2020
(51) Int. Cl.: G06F 16/2458, F25D 29/00

(54) **TIMING INFORMATION FEEDBACK METHOD AND PREDICTION SYSTEM FOR REFRIGERATOR**

(30) Priority: 25.10.2019 CN 201911022465
(71) Applicant: Qingdao Haier Refrigerator Co., Ltd, Qingdao, Shandong 266101 (CN); Haier Smart Home Co., Ltd., Qingdao, Shandong 266101 (CN)
(72) Inventor: ZHOU, Heng, Qingdao, Shandong 266101 (CN); HUANG, Yi, Qingdao, Shandong 266101 (CN)
(74) Representative: Lavoix
(86) International application number: PCT/CN2020/100602
(87) International publication number: WO 2021/077803

(57) **Abstract**

The present invention provides a timing information feedback method and prediction system for a refrigerator. The method includes: presetting an information source including audio information and/or video information; synchronously inserting and continuously running the information source at the start of timing; and closing the information source at the end of timing. During the timing running process, the feedback of the information source is increased, so that a user can receive ending information at the first time, thereby improving the user experience.

## Description

### CROSS-REFERENCE TO RELATED APPLICATION

The present application is based on and claims priority of the Chinese Patent Application No. 201911022465.6, filed on October 25, 2020 and entitled "TIMING INFORMATION FEEDBACK METHOD AND PREDICTION SYSTEM FOR REFRIGERATOR", the invention of which is incorporated herein by reference in its entirety.

### TECHNICAL FIELD

The present invention relates to the technical field of household appliances, and in particular to a timing information feedback method for a refrigerator.

### BACKGROUND

Refrigerators have become essential household appliances of many families. With the progress of science and technology, users have higher and higher requirements for performances of refrigerators.

Refrigerators tend to develop intelligently in use over time. In order to exhibit assorted applications in a kitchen better, timers are provided on existing refrigerators for ease of use.

In the prior art, a user usually does not focus on a timer all the time while using the timer. Particularly, since the timer on the refrigerator usually only displays a clock pattern, the user may miss the ending time of timing at the end of timing.

In order to avoid the above problem, the timer is improved in the existing timing; and audio alarm information is usually activated at the end of timing so as to remind the user that the timing is ended.

However, the reminding generally is a short beep sound that reminds three times at most according to setting of the user. When the user focuses on doing other things, the short alarm sound is also easy to miss. In addition, the user cannot get other good user experiences during timing.

### SUMMARY

Objectives of the present invention are to provide a timing information feedback method and prediction system for a refrigerator.

In order to achieve one of the objectives of the present invention described above, an embodiment of the present invention provides a timing information feedback method for a refrigerator. The method includes: presetting an information source including audio information and/or video information;
synchronously inserting and continuously running the information source at the start of timing; and
closing the information source at the end of timing.

As a further improvement of an embodiment of the present invention, synchronously inserting the information source at the start of timing specifically includes:
presetting an online information source in a local database of the refrigerator;
randomly acquiring any information source at the start of timing by querying the local database of the refrigerator, and synchronizing the information source with the timing; or
selecting the information source according to requirements at the start of timing by querying the local database of the refrigerator, acquiring the selected information source, and synchronizing the information source with the timing.

As a further improvement of an embodiment of the present invention, synchronously inserting the information source at the start of timing specifically includes:
connecting to a remote database in a communication manner at the start of timing, randomly acquiring any information source by querying the remote database, and synchronizing the information source with the timing; or
connecting to the remote database in a communication manner at the start of timing, selecting the information source according to requirements by querying the remote database, acquiring the selected information source, and synchronizing the information source with the timing; or
firstly determining whether there is an information source in the local database at the start of timing by querying the local database of the refrigerator; if yes, acquiring the information source in a random or selective manner, and synchronizing the acquired information source with the timing; or if not, connecting to the remote database in a communication manner, acquiring the information source in the random or selective manner, and synchronizing the acquired information source with the timing.

As a further improvement of an embodiment of the present invention, the method further includes: presetting a display screen on the refrigerator, wherein the display screen displays a first image in a period from the start of timing to the end of timing, and displays a second image before the start of timing and after the end of timing; and
the first image and the second image are different in that, the first image is a dynamic image, and the second image is a dynamic image and/or a static image.

As a further improvement of an embodiment of the present invention, prior to the start of timing, the method further includes:
receiving a category signal, and adjusting display content of the first image based on the category signal, wherein
the category signal includes a count-up signal and a count-down signal.

In order to achieve the other objective of the present invention described above, an embodiment of the present invention provides a timing information feedback system for a refrigerator. The system includes: a configuring module configured to preset an information source including audio information and/or video information; and
a controlling module configured to synchronously insert and continuously run the information source at the start of timing; and
close the information source at the end of timing.

As a further improvement of an embodiment of the present invention, the configuring module is further configured to preset an online information source in a local database of the refrigerator; and
the controlling module is further configured to randomly acquire any information source at the start of timing by querying the local database of the refrigerator, and synchronize the information source with the timing; or
select the information source according to requirements at the start of timing by querying the local database of the refrigerator, acquire the selected information source, and synchronize the information source with the timing.

As a further improvement of an embodiment of the present invention, the controlling module is further configured to:
connect to a remote database in a communication manner at the start of timing, randomly acquire any information source by querying the remote database, and synchronize the information source with the timing; or
connect to the remote database in a communication manner at the start of timing, select the information source according to requirements by querying the remote database, acquire the selected information source, and synchronize the information source with the timing; or
firstly determine whether there is an information source in the local database at the start of timing by querying the local database of the refrigerator; if yes, acquire the information source in a random or selective manner, and synchronize the acquired information source with the timing; if not, connect to the remote database in a communication manner, acquire the information source in the random or selective manner, and synchronize the acquired information source with the timing.

As a further improvement of an embodiment of the present invention, the configuring module is further configured to preset a display screen on the refrigerator;
the display screen displays a first image in a period from the start of timing to the end of timing, and displays a second image before the start of timing and after the end of timing; and
the first image and the second image are different in that, the first image is a dynamic image, and the second image is a dynamic image and/or a static image.

As a further improvement of an embodiment of the present invention, prior to the start of timing, the controlling module is further configured to receive a category signal and adjust display content of the first image based on the category signal, wherein
the category signal includes a count-up signal and a count-down signal.

The present invention has the following beneficial effects. The timing information feedback method and prediction system for the refrigerator according to the present invention increase the feedback of the information source in the timing running process, so that the user may receive ending information at the first time, thereby improving the user experience.

### BRIEF DESCRIPTION OF THE DRAWINGS

FIG. 1 is a flowchart of a timing information feedback method for a refrigerator according to a first embodiment of the present invention; and
FIG. 2 is a schematic diagram of a timing information feedback system for a refrigerator according to an embodiment of the present invention.

### DETAILED DESCRIPTION

The present invention will be described in detail below in combination with the embodiments shown in the drawings. However, these embodiments are not intended to limit the present invention, and all structural or functional variations made by those of ordinary skills in the art according to these embodiments shall be included in the protection scope of the present invention.

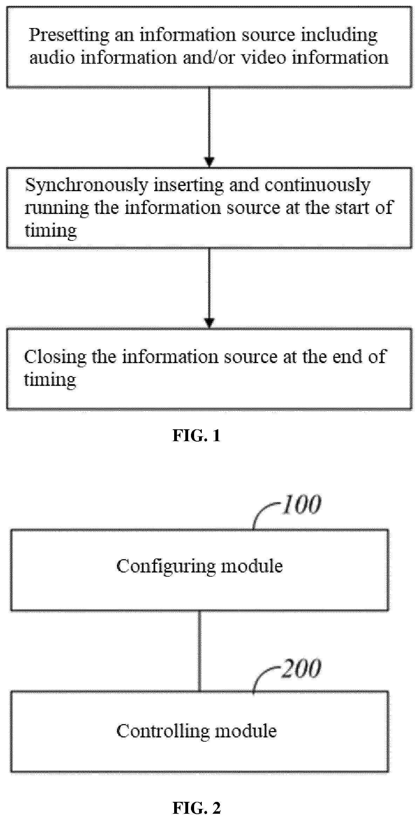

As shown in FIG. 1, a first embodiment of the present invention provides a timing information feedback method for a refrigerator. The method includes: presetting an information source including audio information and/or video information; synchronously inserting and continuously running the information source at the start of timing; and closing the information source at the end of timing.

In a possible embodiment of the present invention, the information source may be stored in a local server of the refrigerator, or stored in a remote server; in the case of storing the information source in the local server, the information source may be directly invoked when it is required to insert the information source; in the case of storing the information source in the remote server, a communication connection with the remote server is firstly established when it is required to insert the information source, and then, the information source is invoked; and there are many manners of remote communication connection, such as a local area network, Bluetooth, WIFI, internet and RFIDI.

Correspondingly, in a possible embodiment of the present invention, at the start of timing, synchronously inserting the information source specifically includes: presetting an online information source in a local database of the refrigerator; randomly acquiring any information source at the start of timing by querying the local database of the refrigerator, and synchronizing the information source with the timing; or selecting the information source according to requirements at the start of timing by querying the local database of the refrigerator, acquiring the selected information source, and synchronizing the information source with the timing.

In a preferred embodiment of the present invention, at the start of timing, synchronously inserting the information source specifically includes:
connecting to a remote database in a communication manner at the art of timing, randomly acquiring any information source by querying the remote database, and synchronizing the information source with the timing; or
connecting to the remote database in a communication manner at the start of timing, selecting the information source according to requirements by querying the remote database, acquiring the selected information source, and synchronizing the information source with the timing; or
firstly determining whether there is an information source in the local database at the start of timing by querying the local database of the refrigerator; if yes, acquiring the information source in a random or selective manner, and synchronizing the acquired information source with the timing; if not, connecting to the remote database in a communication manner, acquiring the information source in the random or selective manner, and synchronizing the acquired information source with the timing.

It is to be noted that, the manner in which the information source is invoked may be specifically set according to requirements. In an embodiment, the preset information source includes a plurality of voices and/or a plurality of videos. After the start of timing, any information source may be randomly selected and played. Certainly, the information source may also be played in a loop until the end of timing.

In another embodiment, the information source stored in the local database also includes a plurality of songs, stories, learning materials, movies, and the like embodied in an audio and/or video manner. After the start of timing, the desired information source may be selected in an on-demand selective manner, and the selected information source may be played in sync with the timing until the end of timing.

In addition, the number of the invoked information sources is not specifically limited from the start of timing to the end of timing.

In other embodiments of the present invention, the information source may also be set to other types of information, such as a real-time interaction interface or a traditional silent mode. At the start of timing, the type of the information source to be inserted is firstly determined, and then, the appropriate information source is selected and played in sync with the timing.

In a preferred embodiment of the present invention, the method further includes: presetting a display screen on the refrigerator, wherein the display screen displays a first image in a period from the start of timing to the end of timing, and displays a second image before the start of timing and after the end of timing; and the first image and the second image are different in that, the first image is a dynamic image, and the second image is a dynamic image and/or a static image.

Further, prior to the start of timing, the method further includes: receiving a category signal, and adjusting display content of the first image based on the category signal, wherein the category signal includes a count-up signal and a count-down signal.

In a specific embodiment of the present invention, the first pattern is, for example, clock information, which is manly configured to identify the progress of time in the period from the start of timing to the end of timing. Digital display is taken as an example. When the category signal is the count-up signal, a displayed figure changes increasingly until the end of timing, and then, the first image stops changing and is converted into the second image; and when the category signal is the count-down signal, the displayed figure changes decreasingly to zero, and is converted into the second image. In this way, even when a user operating the refrigerator is a deaf and dumb person, an appropriate experience effect may still be brought to the user.

The first image generally is a dynamic image that, for example, enables the user to observe a real-time state of timing in the timing process. The second image generally is a static image, which is conducive to saving energy. Certainly, the second image may also be other image information different from the first image to facilitate distinguishing a timing state from a non-timing state.

In a specific application scenario of the present invention, the refrigerator is placed in a kitchen, the user cooks for half an hour, the category of timing is countdown, and other supplies are prepared in this period. Firstly, the user assists in starting a timing function of the refrigerator and selects an appropriate information source, and then starts timing. After the start of timing, the system automatically inserts the selected information source and synchronizes the information source with the timing. For example, if the information source is an audio file, the audio file will be started along with the timing in the timing process; and at the same time, the display screen displays a first image for identifying the countdown. The user may acquire the remaining time in real time by observing the display screen while listening to splendid music by sense of hearing in the timing process. At the end of timing, the information source is closed, and the user may determine that the timing is ended through termination of the sound.

As shown in FIG. 2, an embodiment of the present invention provides a timing information feedback system for a refrigerator. The system includes a configuring module 100 and a controlling module 200.

The configuring module 100 is configured to preset an information source including audio information and/or video information.

The controlling module 200 is configured to synchronously insert and continuously run the information source at the start of timing; and close the information source at the end of timing.

In a possible embodiment of the present invention, the information source may be stored in a local server of the refrigerator, or stored in a remote server. In the case of storing the information source in the local server, the information source may be directly invoked when it is required to insert the information source; and in the case of storing the information source in the remote server, a communication connection with the remote server is firstly established when it is required to insert the information source, and then, the information source is invoked. There are many manners of remote communication connection, such as a local area network, Bluetooth, WIFI, internet and RFIDI.

Correspondingly, in a possible embodiment of the present invention, the configuring module 100 is further configured to preset an online information source in a local database of the refrigerator; and the controlling module 200 is further configured to randomly acquire any information source at the start of timing by querying the local database of the refrigerator and synchronize the information source with the timing; or select the information source according to requirements at the start of timing by querying the local database of the refrigerator, acquire the selected information source, and synchronize the information source with the timing.

In a preferred embodiment of the present invention, the controlling module 200 is further configured to connect to a remote database in a communication manner at the start of timing, randomly acquire any information source by querying the remote database, and synchronize the information source with the timing; or
connect to the remote database in a communication manner at the start of timing, select the information source according to requirements by querying the remote database, acquire the selected information source, and synchronize the information source with the timing; or
firstly determine whether there is an information source in the local database at the start of timing by querying the local database of the refrigerator; if yes, acquire the information source in a random or selective manner, and synchronize the acquired information source with the timing; if not, connect to the remote database in a communication manner, acquire the information source in the random or selective manner, and synchronize the acquired information source with the timing.

It is to be noted that the manner in which the information source is invoked may be specifically set according to requirements. In an embodiment, the preset information source includes a plurality of voices and/or a plurality of videos. Any information source is randomly selected and played after the start of timing. Certainly, the information source may also be played in a loop until the end of timing.

In another embodiment, the information source stored in the local database also includes a plurality of songs, stories, learning materials, movies, and the like embodied in an audio and/or video manner. The desired information source may be selected in an on-demand selective manner after the start of timing, and the selected information source may be played in sync with the timing until the end of timing.

In addition, the number of the invoked information sources is not specifically limited from the start of timing to the end of timing.

In other embodiments of the present invention, the information source may also be set to other types of information, such as a real-time interaction interface or a traditional silent mode. The type of the information source to be inserted is firstly determined at the start of timing, and then, the appropriate information source is selected and played in sync with the timing.

In a preferred embodiment of the present invention, the configuring module 100 is further configured to preset a display screen on the refrigerator. The display screen displays a first image in a period from the start of timing to the end of timing, and displays a second image before the start of timing and after the end of timing; and the first image and the second image are different in that, the first image is a dynamic image, and the second image is a dynamic image and/or a static image.

Further, prior to the start of timing, the controlling module 200 is further configured to receive a category signal and adjust display content of the first image based on the category signal, wherein the category signal includes a count-up signal and a count-down signal.

For convenience and simplicity of description, those skilled in the art may clearly understand the specific operation processes of the above modules and refer to the corresponding processes in the above method embodiments, which is not repeated herein.

In summary, the timing information feedback method and prediction system for the refrigerator according to the present invention increase the feedback of the information source in the timing running process, so that the user may receive ending information at the first time, thereby improving the user experience.

It is to be understood that although the description is described according to the embodiments, not every embodiment only includes one independent technical solution. Such a description manner is only for sake of clarity. Those skilled in the art should take the description as an integral part, and the technical solutions in different embodiments may be suitably combined to form other embodiments understandable by those skilled in the art.

The above detailed description only specifies available embodiments of the present invention, and is not intended to limit the protection scope of the present invention. All equivalent embodiments or modifications not departing from the spirit of the present invention should be included in the protection scope of the present invention.

## Claims

1. A timing information feedback method for a refrigerator, comprising:
presetting an information source comprising audio information and/or video information;
synchronously inserting and continuously running the information source at the start of timing; and
closing the information source at the end of timing.

2. The timing information feedback method for the refrigerator according to claim 1, wherein synchronously inserting the information source at the start of timing specifically comprises:
presetting an online information source in a local database of the refrigerator;
randomly acquiring any information source at the start of timing by querying the local database of the refrigerator, and synchronizing the information source with the timing; or
selecting the information source according to requirements at the start of timing by querying the local database of the refrigerator, acquiring the selected information source, and synchronizing the information source with the timing.

3. The timing information feedback method for the refrigerator according to claim 1, wherein synchronously inserting the information source at the start of timing specifically comprises:
connecting to a remote database in a communication manner at the start of timing, randomly acquiring any information source by querying the remote database, and synchronizing the information source with the timing; or
connecting to the remote database at the start of timing, selecting the information source according to requirements by querying the remote database, acquiring the selected information source, and synchronizing the information source with the timing; or
firstly determining whether there is an information source in the local database at the start of timing by querying the local database of the refrigerator; if yes, acquiring the information source in a random or selective manner, and synchronizing the acquired information source with the timing; if not, connecting to the remote database in a communication manner, acquiring the information source in the random or selective manner, and synchronizing the acquired information source with the timing.

4. The timing information feedback method for the refrigerator according to claim 1, further comprising: presetting a display screen on the refrigerator, wherein the display screen displays a first image in a period from the start of timing to the end of timing, and displays a second image before the start of timing and after the end of timing; and
the first image and the second image are different in that, the first image is a dynamic image, and the second image is a dynamic image and/or a static image.

5. The timing information feedback method for the refrigerator according to claim 1, prior to the start of timing, further comprising:
receiving a category signal, and adjusting display content of the first image based on the category signal, wherein
the category signal comprises a count-up signal and a count-down signal.

6. A timing information feedback system for a refrigerator, comprising:
a configuring module, configured to preset an information source comprising audio information and/or video information; and
a controlling module, configured to synchronously insert and continuously run the information source at the start of timing; and
close the information source at the end of timing.

7. The timing information feedback system for the refrigerator according to claim 6, wherein the configuring module is further configured to preset an online information source in a local database of the refrigerator; and
the controlling module is further configured to randomly acquire any information source at the start of timing by querying the local database of the refrigerator and synchronize the information source with the timing; or
select the information source according to requirements at the start of timing by querying the local database of the refrigerator, acquire the selected information source, and synchronize the information source with the timing.

8. The timing information feedback system for the refrigerator according to claim 7, wherein the controlling module is further configured to:
connect to a remote database at the start of timing, randomly acquire any information source by querying the remote database, and synchronize the information source with the timing; or
connect to the remote database in a communication manner at the start of timing, select the information source according to requirements by querying the remote database, acquire the selected information source, and synchronize the information source with the timing; or
firstly determine whether there is an information source in the local database at the start of timing by querying the local database of the refrigerator; if yes, acquire the information source in a random or selective manner, and synchronize the acquired information source with the timing; if not, connect to the remote database in a communication manner, acquire the information source in the random or selective manner, and synchronize the acquired information source with the timing.

9. The timing information feedback system for the refrigerator according to claim 6, wherein the configurating module is further configured to preset a display screen on the refrigerator;
the display screen displays a first image in a period from the start of timing to the end of timing, and displays a second image before the start of timing and after the end of timing; and
the first image and the second image are different in that, the first image is a dynamic image, and the second image is a dynamic image and/or a static image.

10. The timing information feedback system for the refrigerator according to claim 6, wherein prior to the start of timing the controlling module is further configured to receive a category signal and adjust display content of the first image based on the category signal, wherein
the category signal comprises a count-up signal and a count-down signal.
